# FASCICULE DE BREVET EUROPEEN

(11) **EP 0 844 173 B1**
(45) Date de publication et mention de la délivrance du brevet: **16.07.2003**
(21) Numéro de dépôt: 97402789.8
(22) Date de dépôt: 20.11.1997
(51) Int. Cl.: B64D 27/26

(54) **Suspension avant redondante pour turbomachine**
Redundantes, vorderes Aufhängungssystem für ein Turbotriebwerk
Redundant front suspension for a turbine engine

(30) Priorité: 21.11.1996 FR 9614189
(43) Date de publication de la demande: 27.05.1998
(73) Titulaire: Snecma Moteurs, 75015 Paris (FR)
(72) Inventeur: Demouzon, Francis Michel, 77240-Cesson (FR); Fer, René Pierre, 77190 Dammarie Les Lys (FR); Huet, Patrick Jean Alibert, 91090-Lisses (FR); Marnas, Laurent Pierre Elysée Gaston, 77000 Vaux Le Penil (FR)

(56) Documents cités:
- FR-A- 2 217 549
- US-A- 4 065 077

## Description

L'invention concerne une suspension avant redondante d'une turbomachine destinée à être fixée sur un mât porté par un avion, selon le préambule de la revendication 1. Le mot "avant" étant pris par rapport au sens de l'écoulement du flux dans le moteur pour désigner la partie de la turbomachine éloignée de la zone d'éjection du flux.

De façon connue, une turbomachine d'aviation est accrochée à un mât, conçu pour assurer la transmission mécanique des efforts entre la turbomachine et la structure de l'avion, au moyen d'un dispositif de suspension avant et d'un dispositif de suspension arrière. Ces dispositifs de suspension doivent supporter les efforts mécaniques, selon l'axe vertical Z, dus à la masse de la turbomachine, et les efforts dynamiques, selon l'axe transversal Y, induits par les mouvements de l'avion. Les charges générées par la poussée du moteur, dirigés selon l'axe longitudinal X, sont transmises à l'un des dispositifs de suspension par des barres de reprise de poussée inclinées situées de part et d'autre de la turbomachine.
De plus pour des raisons évidentes de sécurité, la suspension de la turbomachine doit être redondante. Dans ce cas, il est possible de choisir entre deux solutions : soit doubler toutes les pièces, chacune étant capable de supporter seule les efforts fixés, soit adjoindre des composants qui sont disposés en attente et qui ne supportent les efforts qu'en cas de rupture de la suspension principale.
US A-4 065 077 décrit une suspension avant d'une turbomachine sur un mât, dans laquelle deux chapes comportent, une extrémité montée avec jeu de façon à reprendre les efforts en cas de rupture de la suspension normale. Cependant la suspension n'est pas complètement redondante car ces deux chapes participent également à la transmission des efforts au mât lors du fonctionnement normal, ce qui ne permet pas d'assurer une sécurité suffisante en cas de rupture de l'un des éléments de la suspension normale.

Le but de l'invention est d'équiper une suspension normale avant d'une turbomachine sur un mât avec des pièces en attente susceptibles de supporter les efforts selon l'un quelconque au moins des axes X, Y, Z en cas de défaillance de la suspension normale.

Selon l'invention le dispositif de suspension de sécurité comporte un premier support destiné à être fixé sur le mât et qui présente une chape verticale selon les axes X et Z capable de reprendre les efforts selon l'axe Z, et une chape horizontale selon les axes X et Y capable de reprendre les efforts selon les axes X et Y,
un deuxième support destiné à être fixé sur le carter intermédiaire de la turbomachine et qui présente une chape verticale selon las axes X et Z capable de reprendre les efforts selon l'axe Z et un doigt vertical selon l'axe Z capable de reprendre les efforts selon les axes X et Y, ledit doigt étant disposé avec un jeu dans un alésage ménagé dans la chape horizontale du premier support, et une bielle reliant la chape verticale du premier support à la chape verticale du deuxième support, ladite bielle étant montée avec un jeu sur l'une desdites chapes verticales.

En fonctionnement normal, seul le support de base supporte les efforts et les charges transmises entre la turbomachine et le mât. Grâce aux jeux prévus entre le doigt et l'alésage qui le reçoit et grâce au jeu prévu dans la liaison de la bielle, le premier support et le deuxième support sont mécaniquement dissociés.

Les avantageuses dispositions suivantes sont de préférence adoptées :
- la chape verticale du premier support est disposée au-dessus de la chape horizontale dudit premier support ;
- la chape verticale du deuxième support est disposée à l'avant du doigt;
- la chape verticale du deuxième support comporte deux oreilles disposées de part et d'autre de l'extrémité de la bielle et à l'avant de la chape horizontale du premier support.

D'autres avantages et caractéristiques de l'invention ressortiront à la lecture de la description suivante faite à titre d'exemple et en référence aux dessins annexés dans lesquels :
la figure 1 montre en perspective l'ensemble de la suspension avant redondante selon l'invention monté sur le mât d'un avion, la turbomachine n'étant pas représentée par souci de clarté ;
la figure 2 est une représentation en perspective de la suspension normale de la turbomachine et des barres de reprise de poussée ;
la figure 3 montre le mât de l'avion et les éléments du dispositif de suspension de sécurité qui sont fixés au mât ;
la figure 4 montre le dispositif de suspension de sécurité seul ;
la figure 5 est une représentation en perspective du premier support du dispositif de suspension de sécurité selon l'invention ;
la figure 6 est une représentation en perspective du deuxième support du dispositif de suspension de sécurité selon l'invention ;
la figure 7 est une coupe de la suspension avant montrée sur la figure 1 selon un plan perpendiculaire à l'axe longitudinal X et passant par l'axe de la broche de liaison de la bielle et du deuxième support ; et
la figure 8 est une coupe de la suspension avant montrée sur la figure 1 selon un plan perpendiculaire à l'axe longitudinal X et passant par l'axe du doigt du deuxième support.

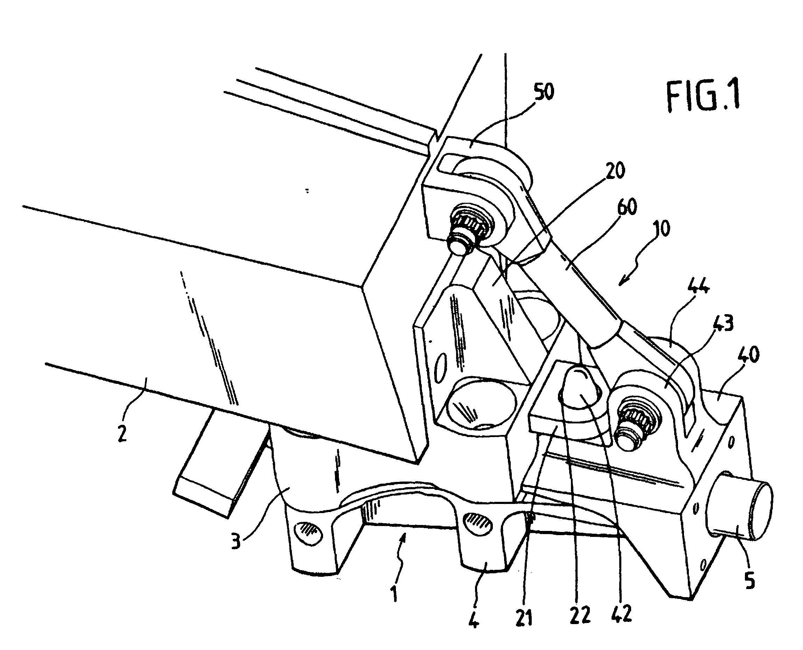

La figure 1 montre une suspension avant redondante 1 d'une turbomachine sur le mât 2 d'un avion. Par souci de clarté, la turbomachine n'est pas représentée sur les dessins. Il suffit de savoir que le point de suspension avant de la turbomachine est prévu sur le carter intermédiaire de cette turbomachine.

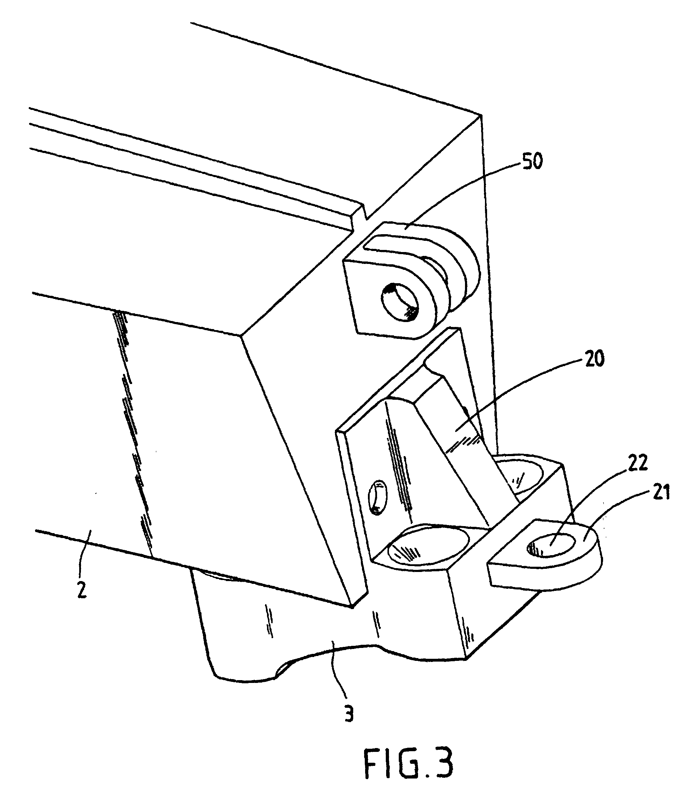

Le mât 2 est équipé d'un talon 3 qui contient tous les éléments de fixation de la suspension 1 sur le mât, ainsi que cela est représenté sur les figures 1 et 3.

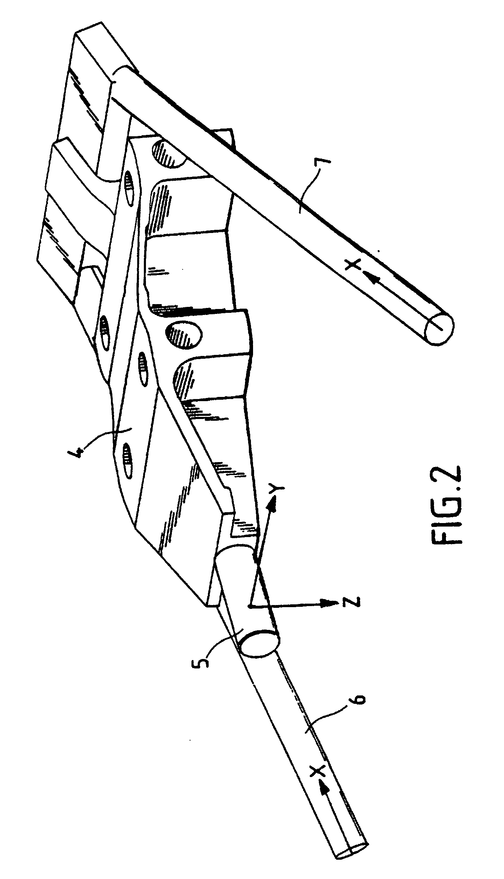

La suspension normale avant de la turbomachine comporte un support de base 4, représenté sur les figures 1 et 2. Ce support de base 4 est fixé sous le talon 3. Il s'étend vers l'avant de l'avion, dans le sens de l'avancement en vol de ce dernier. Son extrémité avant comporte un axe de support 5 qui est dirigé selon l'axe longitudinal X du trièdre de référence de l'avion et qui constitue l'axe de suspension avant de la turbomachine. Cet axe de support 5 permet la reprise des efforts dirigés suivant l'axe vertical Z et l'axe transversal Y du trièdre de référence, qui sont générés par la masse du moteur, et les efforts dynamiques dus aux accélérations verticales et latérales provoquées par les mouvements de l'avion suivant ces directions.

Les références 6 et 7 représentent les barres de reprise de poussée qui sont inclinées, et dont les extrémités avant sont fixées latéralement sur le carter intermédiaire de la turbomachine. Ces barres de reprise de poussée 6 et 7 supportent les efforts induits par la poussée du moteur et qui est dirigée selon l'axe longitudinal X du trièdre de référence.

A la suspension normale décrite ci-dessus, est adjoint un dispositif de suspension de sécurité 10 qui ne travaille qu'en cas de défaillance de la suspension normale.

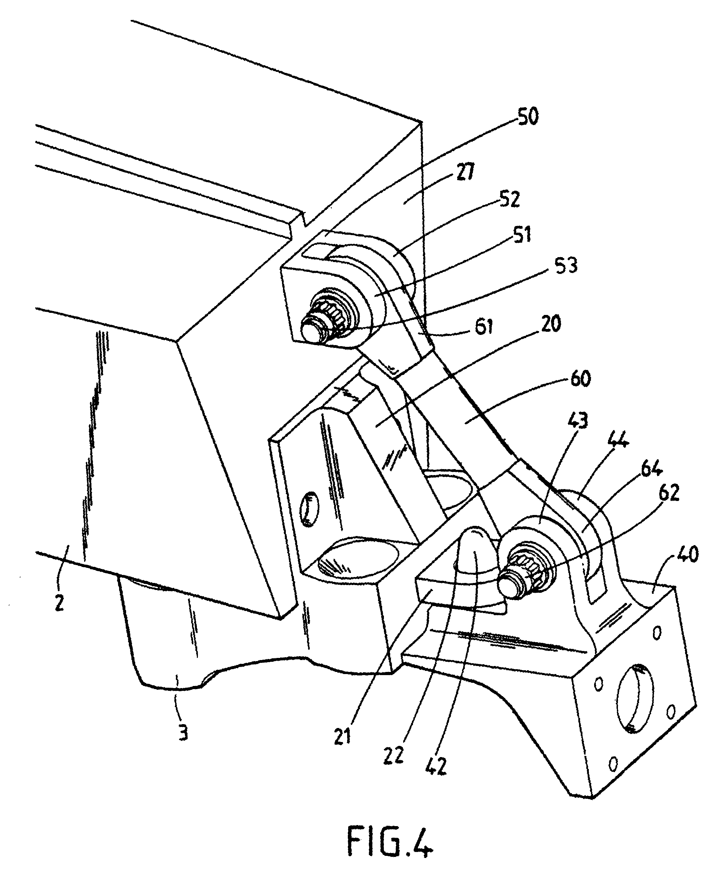

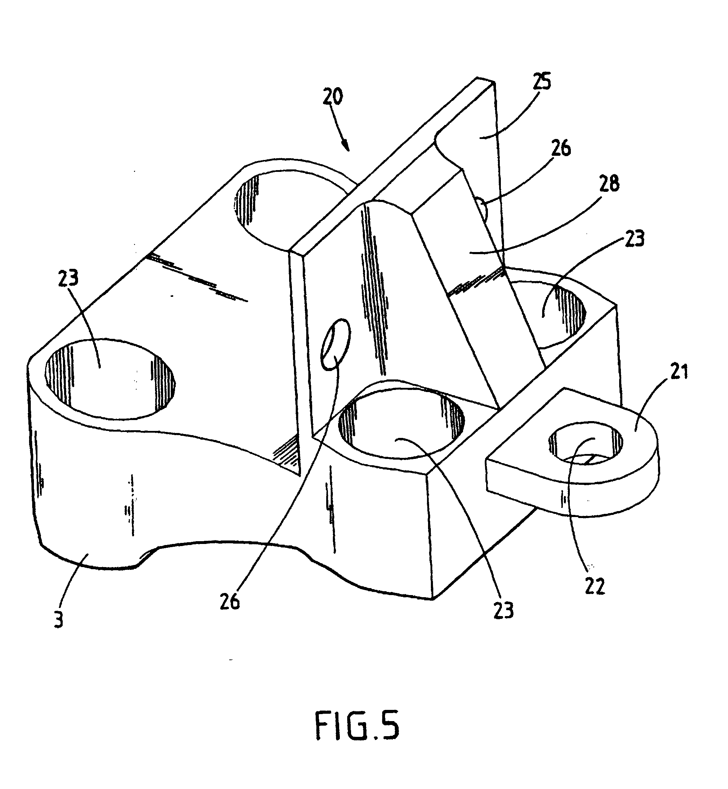

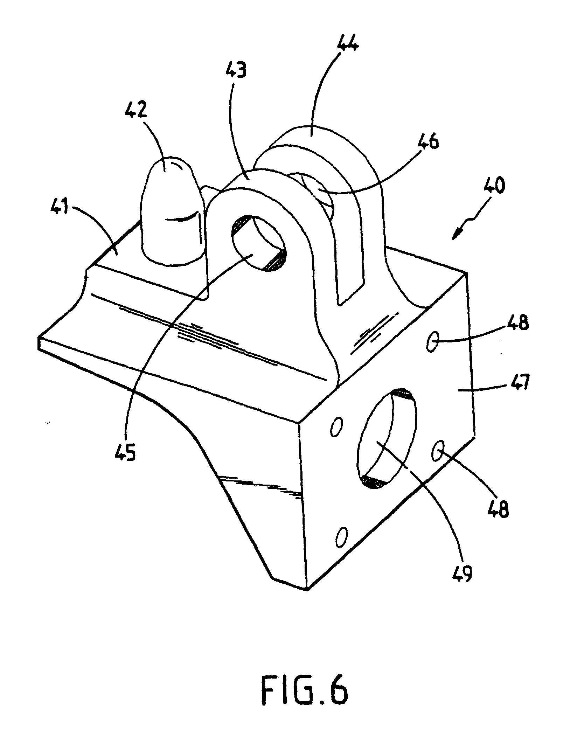

Ce dispositif de suspension de sécurité 10 comporte un premier support 20 fixé au mât 2 et un deuxième support 40 fixé au carter intermédiaire de la turbomachine. Le premier support 20 est montré sur les figures 1, 4 et 5, et le deuxième support 40 est représenté sur les figures 1,4 et 6.

Le dispositif de suspension de sécurité comporte en outre une chape verticale 50 fixée au mât 2 et une bielle 60 reliant la chape verticale 50 au deuxième support 40.

Sur les dessins, la chape verticale est dissociée du premier support 20 et disposée au-dessus de ce dernier, mais la chape verticale 50 pourrait constituer une seule pièce avec le premier support 20 sans sortir du cadre de l'invention. De même, le premier support 20 et le talon 3 constituent une seule pièce monobloc. Mais le premier support 20 et le talon 3 pourraient être réalisés en deux pièces superposées à l'avant du talon 3 et liées entre elles par boulonnage, sans sortir du cadre de l'invention.

Le premier support 20 comporte à l'avant une chape horizontale 21 qui présente un alésage vertical 22, et dans sa partie médiane, une plaque verticale 25, dirigée vers le haut et qui comporte des orifices 26 pour sa fixation par boulonnage sur une paroi frontale 27 du mât 2. La référence 23 représente des orifices pour la fixation du support de base 4 sur le talon 3, et la référence 28 une paroi de rigidification qui s'étend vers l'avant à partir de la paroi verticale 25.

La chape verticale 50 fixée sur la paroi frontale 27 du mât 2 comporte deux oreilles verticales 51, 52 munies d'alésages coaxiaux destinés au passage d'une broche 53 traversant la tête supérieure 61 de la bielle 60.

Le premier support 20 et la chape verticale 50 sont dimensionnés de telle manière que la chape verticale 50 puisse reprendre les efforts générés par la turbomachine selon l'axe des Z, et que la chape horizontale 21 puisse reprendre les efforts et charges produits par la turbomachine selon les axes X et Y, en cas de défaillance de la suspension normale.

Le deuxième support 40 réalisé en une seule pièce comporte à l'arrière de sa face supérieure 41, un doigt vertical 42 dirigé vers le haut, et à l'avant de cette même face supérieure 41, deux oreilles verticales 43 et 44, espacées dans des plan perpendiculaires à l'axe Y et présentant des alésages coaxiaux 45 et 46 pour la fixation d'une broche 62 traversant un alésage 63 ménagée dans la tête inférieure 64 de la bielle 60. A l'avant du deuxième support 40, est prévu une plaque 47 qui s'étend vers le bas et qui est perpendiculaire à l'axe X. La plaque 47 comporte des orifices 48 pour la fixation par boulonnage du deuxième support 40 sur le carter intermédiaire de la turbomachine et un alésage 49 permettant le passage et les mouvements relatifs de l'axe de support 5 du support de base 4. Le deuxième support 40 est dimensionné de telle manière que les oreilles 43 et 44 puissent supporter les efforts exercés par la turbomachine suivant l'axe Z et de telle manière que le doigt 42 puisse reprendre les efforts suivants l'axe des X et des Y en cas de défaillance de la suspension normale.

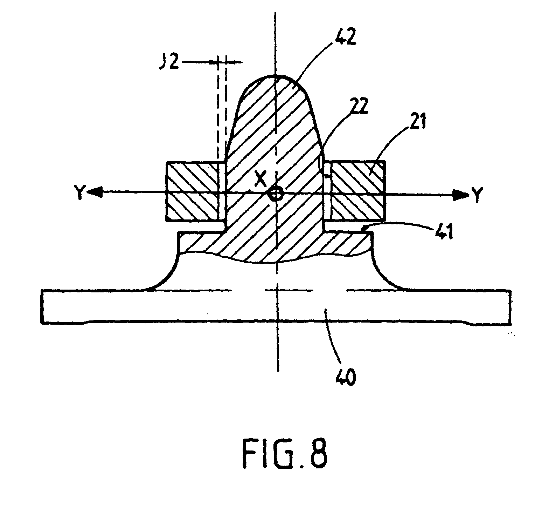

Les dimensions du premier support 20 et du deuxième support 40 sont telles que, lorsque la turbomachine est suspendue au mât 2 par le support de base 4, le premier support 20 étant fixé au mât 2 et le deuxième support 40 étant fixé au carter intermédiaire, le doigt 42 est positionné avec un jeu J2 dans l'alésage 22 de la chape horizontale 21 du premier support. Ainsi qu'on le voit sur la figure 8, la face supérieure 41 du deuxième support 40 est écartée de la face inférieure du flasque horizontal 21 du premier support. En outre le deuxième support 40 ne touche pas le support de base 4. Dans les conditions normales de fonctionnement de la suspension normale, le deuxième support 40 n'a aucune liaison avec le support de base 4 ni avec le premier support 20.

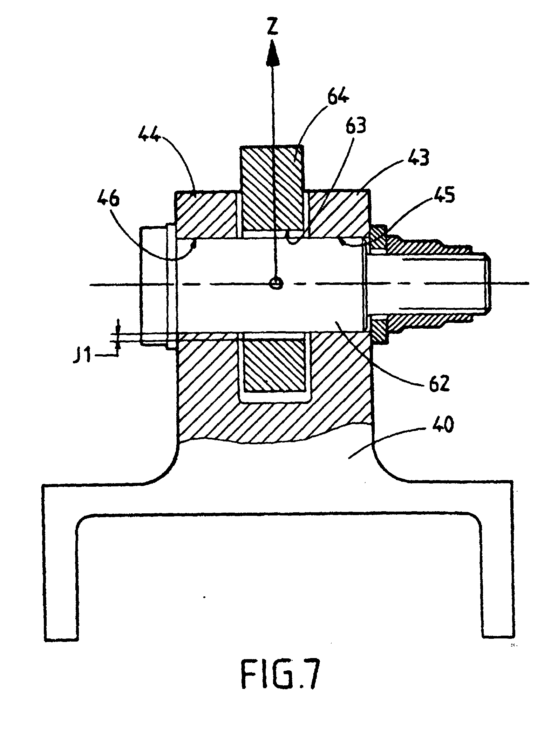

Les dimensions de la tête inférieure 64 de la bielle 60 et de l'alésage 63 de la tête 64, sont telles que la broche 62 traverse avec un jeu J1 l'alésage 63 de la tête de bielle 64, cette dernière étant en outre disposée avec jeu entre les oreilles 43 et 44 du deuxième support, ainsi que cela est représenté sur la figure 7.

En l'absence de défaillance de la suspensions normale 4 ou des barres de reprise de poussée 6, 7, la bielle 60 n'est soumise à aucune contrainte.

En cas de défaillance de la suspension normale, par suite de rupture de l'axe de support 5 du support de base 4, par exemple, les efforts suivant l'axe transversal Y sont supportés par le doigt 42 et la chape horizontale 21 du premier support 20, les efforts suivant l'axe vertical Z sont repris par les oreilles 43, 44 du deuxième support 40, la broche 62, la bielle 60 et la chape verticale 50 fixée au mât 2, tandis que les charges suivant l'axe longitudinal X sont supportées par les barres de reprise de poussée 6 et 7.

En cas de rupture de l'une des barres de reprise de poussée 6, 7, les charges suivant l'axe longitudinal X sont reprises par le doigt vertical 42 et la chape horizontale 21 du premier support 20, tandis que les efforts suivant les axes Y et Z sont supportés par la suspension normale.

Enfin, en cas de rupture de l'axe de support 5 et de l'une des barres de reprises de poussée 6, 7, la totalité des efforts et des charges est transmise du deuxième support 40 au mât 2 par l'intermédiaire du premier support 20 et de la bielle 60.

## Revendications

1. Suspension avant redondante d'une turbomachine destinée à être fixée sur un mât porté par un avion, cette suspension comportant, d'une part, un support de base (4) et des barres de reprise de poussée (6,7), ce support de base (4) destiné à être fixé au mât et relié au carter intermédiaire de la turbomachine pour réaliser la suspension normale avant de la turbomachine, en assurant la transmission mécanique des efforts selon l'axe transversal Y et l'axe vertical Z entre le carter intermédiaire et le mât, pendant que les barres de reprise de poussée (6, 7) destinées à être interposées entre la turbomachine et le support de base (4) assurent la transmission au mât des efforts de poussée selon l'axe longitudinal X, et, d'autre part, un dispositif de suspension de sécurité (10) ne travaillant qu'en cas de rupture d'un élément de la suspension normale avant,
**caractérisée par le fait que** ledit dispositif de suspension de sécurité (10) comporte
un premier support (20) destiné à être fixé sur le mât et qui présente une chape verticale (50) selon les axes X et Z capable de reprendre les efforts selon l'axe Z et une chape horizontale (21) selon les axes X et Y capable de reprendre les efforts selon les axes X et Y,
un deuxième support (40) destiné à être fixé sur le carter intermédiaire de la turbomachine et qui présente une chape verticale (43, 44) selon les axes X et Z capable de reprendre les efforts selon l'axe Z et un doigt vertical (42) selon l'axe Z capable de reprendre les efforts selon les axes X et Y, ledit doigt (42) étant disposé avec un jeu (J2) dans un alésage (22) ménagé dans la chape horizontale (21) du premier support (20),
et une bielle (60) reliant la chape verticale (50) du premier support (20) à la chape verticale (43, 44) du deuxième support (40), ladite bielle (60) étant montée avec un jeu (J1) sur l'une desdites chapes verticales.

2. Suspension selon la revendication 1, **caractérisée par le fait que** la chape verticale (50) du premier support (20) est disposée au-dessus de la chape horizontale (21) dudit premier support (20).

3. Suspension selon la revendication 2, **caractérisée par le fait que** la chape verticale (50) du premier support (20) est dissociée du premier support (20) et destinée à être fixée au mât.

4. Suspension selon la revendication 2, **caractérisée par le fait que** la chape verticale (43, 44) du deuxième support (40) est disposée à l'avant du doigt (42).

5. Suspension selon la revendication 4, **caractérisée par le fait que** la chape verticale du deuxième support (40) comporte deux oreilles (43, 44) disposées de part et d'autre de l'extrémité (64) de la bielle (60).

6. Suspension selon la revendication 5, **caractérisée par le fait que** les deux oreilles (43, 44) sont disposées à l'avant de la chape horizontale (21) du premier support (20).

## Patentansprüche

1. Redundante, vordere Aufhängung für ein Turbotriebwerk zur Befestigung an einem von einem Flugzeug getragenen Stiel, wobei diese Aufhängung aufweist:
einerseits einen Basisträger (4) und Stäbe (6, 7) zur Aufnahme von Schubkraft, wobei der Basisträger (4) an dem Stiel befestigbar und mit dem Zwischengehäuse des Turbotriebwerks verbindbar ist, um die normale, vordere Aufhängung des Turbotriebwerks zu bilden, indem er die mechanische Übertragung der der transversalen Achse Y und der vertikalen Achse Z entsprechenden Kräfte zwischen dem Zwischengehäuse und dem Stiel ermöglicht, während die Stäbe (6, 7) zur Aufnahme von Schubkraft, die zwischen dem Turbotriebwerk und dem Basisträger (4) einfügbar sind, die Übertragung von der Längsachse X entsprechenden Schubkräften auf den Stiel ermöglichen,
und andrerseits eine Sicherheits-Aufhängungsvorrichtung (10), die nur im Fall des Bruchs eines Elements der normalen, vorderen Aufhängung in Funktion tritt,
**dadurch gekennzeichnet,**
**daß** die Sicherheits-Aufhängungsvorrichtung (10) aufweist:
einen ersten Träger (20) zur Befestigung an dem Stiel mit einem den Achsen X und Z entsprechenden, vertikalen Gabelgelenk (50), der die Kräfte in Richtung der Achse Z aufnehmen kann, und einem den Achsen X und Y entsprechenden, horizontalen Gabelgelenk (21), das die den Achsen Z und Y entsprechenden Kräfte aufnehmen kann,
einen an dem Zwischengehäuse des Turbotriebwerks befestigbaren zweiten Träger (40) mit einem den Achsen X und Z entsprechenden, horizontalen Gabelgelenk (43, 44), das die der Achse Z entsprechenden Kräfte aufnehmen kann, und einen der Achse Z entsprechenden vertikalen Finger (42), der die den Achsen X und Y entsprechenden Kräfte aufnehmen kann, wobei dieser Finger (42) mit einem Spiel (J2) in einer Bohrung (22) angeordnet ist, die in dem horizontalen Gabelgelenk (21) des ersten Trägers (20) ausgebildet ist,
und ein Pleuel (60), das das vertikalen Gabelgelenk (50) des ersten Trägers (20) mit dem vertikalen Gabelgelenk (43, 44) des zweiten Trägers (40) verbindet, wobei dieses Pleuel (60) mit einem Spiel (J1) an einem der vertikalen Gabelgelenke montiert ist.

2. Aufhängung nach Anspruch 1, **dadurch gekennzeichnet, daß** das vertikale Gabelgelenk (50) des ersten Trägers (20) über dem horizontalen Gabelgelenk (21) des ersten Trägers (20) angeordnet ist.

3. Aufhängung nach Anspruch 2, **dadurch gekennzeichnet, daß** das vertikale Gabelgelenk (50) des ersten Trägers (20) von dem ersten Träger (20) getrennt ist und zur Befestigung an dem Stiel vorgesehen ist.

4. Aufhängung nach Anspruch 2, **dadurch gekennzeichnet, daß** das vertikale Gabelgelenk (43, 44) des zweiten Trägers (40) vor dem Finger (42) angeordnet ist.

5. Aufhängung nach Anspruch 4, **dadurch gekennzeichnet, daß** das vertikale Gabelgelenk des zweiten Trägers (40) zwei Ösen (43, 44) besitzt, die zu beiden Seiten des Endes (64) des Pleuels (60) angeordnet sind.

6. Aufhängung nach Anspruch 5, **dadurch gekennzeichnet, daß** die beiden Ösen (43, 44) vor dem horizontalen Gabelgelenk (21) des ersten Trägers (20) angeordnet sind.

## Claims

1. Redundant front suspension of a turbomachine intended to be fixed to a pylon borne by an aeroplane, this suspension comprising, on the one hand, a base support- (4) and thrust-reacting bars (6, 7), this base support (4) intended to be fixed to the pylon and connected to the intermediate casing of the turbomachine to produce the normal front suspension of the turbomachine, mechanically transmitting the forces along a transverse axis Y and the vertical axis Z between the intermediate casing and the pylon, while the thrust-reacting bars (6, 7) intended to be inserted between the turbomachine and the base support (4) transmit thrust forces along the longitudinal axis X to the pylon and, on the other hand, a back-up suspension device (10) that comes into operation only should an element of the normal front suspension break, **characterized in that** the said back-up suspension device (10) comprises
a first support (20) intended to be fixed to the pylon and which has a vertical clevis block (50) along the axes X and Z capable of reacting the forces along the axis Z and a horizontal clevis block (21) along the axes X and Y, capable of reacting the forces along the axes X and Y,
a second support (40) intended to be fixed to the intermediate casing of the turbomachine and which has a vertical clevis block (43, 44) along the axes X and Z capable of reacting the forces along the axis Z and a vertical finger (42) along the axis Z capable of reacting the forces along the axes X and Y, the said finger (42) being arranged with clearance (J2) in a bore (22) made in the horizontal clevis block (21) of the first support (20),
and a connecting rod (60) connecting the vertical clevis block (50) of the first support (20) to the vertical clevis block (43, 44) of the second support (40), the said connecting rod (60) being mounted with clearance (J1) on one of the said vertical clevis blocks.

2. Suspension according to Claim 1, **characterized in that** the vertical clevis block (50) of the first support (20) is arranged above the horizontal clevis block (21) of the said first support (20).

3. Suspension according to Claim 2, **characterized in that** the vertical clevis block (50) of the first support (20) is disassociated from the first support (20) and intended to be fixed to the pylon.

4. Suspension according to Claim 2, **characterized in that** the vertical clevis block (43, 44) of the second support (40) is arranged in front of the finger (42).

5. Suspension according to Claim 4, **characterized in that** the vertical clevis block of the second support (40) has two lugs (43, 44) arranged one on each side of the end (64) of the connecting rod (60).

6. Suspension according to Claim 5, **characterized in that** the two lugs (43, 44) are arranged at the front of the horizontal clevis block (21) of the first support (20).
